# EUROPÄISCHE PATENTSCHRIFT

(11) **EP 1 417 994 B1**
(45) Veröffentlichungstag und Bekanntmachung des Hinweises auf die Patenterteilung: **17.12.2008**
(21) Anmeldenummer: 03405785.1
(22) Anmeldetag: 31.10.2003
(51) Int. Cl.: B01D 46/12, F24F 6/14, F24F 3/14

(54) **Tropfenabscheideeinrichtung für Luftströmungskanal**
Droplet separator for air flow channel
Separateur de gouttelettes pour canal de conduit d'air

(30) Priorität: 05.11.2002 CH 18552002
(43) Veröffentlichungstag der Anmeldung: 12.05.2004
(73) Patentinhaber: Walter Meier (Klima International) AG, 8808 Pfäffikon SZ (CH)
(72) Erfinder: Ineichen, Kurt, 6020 Emmenbrücke (CH); Dietziker, Daniel, 8853 Lachen SZ (CH)
(74) Vertreter: Bollhalder, Renato

(56) Entgegenhaltungen:
- CH-A- 673 519
- DE-A- 10 064 911
- DE-C- 10 035 881
- GB-A- 644 391
- US-A- 4 814 033
- PATENT ABSTRACTS OF JAPAN vol. 1998, no. 03, 27. Februar 1998 (1998-02-27) & JP 09 285711 A (MITSUBISHI HEAVY IND LTD), 4. November 1997 (1997-11-04)

## Beschreibung

Die vorliegende Erfindung bezieht sich auf eine Tropfenabscheideeinrichtung für einen Luftströmungskanal, wie sie im Oberbegriff des unabhängigen Patentanspruchs 1 definiert ist.

Tropfenabscheideeinrichtungen werden insbesondere in Luftbefeuchtungsanlagen eingesetzt, welche einen Luftströmungskanal aufweisen, durch den Luft in einer Luftströmungsrichtung strömt. Um die Luft zu befeuchten, gibt es verschiedene Möglichkeiten. Beispielsweise können Düsen eingesetzt werden, die das ihnen zugeführte Wasser in die durchströmende Luft zerstäuben, wobei die Düsen sowohl in als auch gegen die Luftströmungsrichtung gerichtet sein können. Dabei wird das Wasser zu Aerosolen, d.h. schwebefähigen Wassertropfen, zerrissen, die zum Teil in den gasförmigen Zustand übergehen und von der Luft aufgenommen werden. Insbesondere in kurzen Luftströmungskanälen kann die Luft die Aerosole aber nicht immer schnell genug aufnehmen, so dass Wassertropfen verschiedener Grösse von der Luftströmung mitgerissen werden. Diese können nachfolgende Anlageteile benetzen, was zu Korrosionsschäden führen kann. Um solche Korrosionsschäden zu verhindern, werden Tropfenabscheideeinrichtungen eingesetzt, die die Wassertropfen möglichst vollständig aus der durchströmenden Luft entfernen.

Tropfenabscheideeinrichtungen verschiedenster Art gehören zum Stand der Technik. In der CH-A-673 519 ist beispielsweise eine Tropfenabscheideeinrichtung offenbart, die ein den Strömungsquerschnitt des Luftströmungskanals vollständig abdeckendes Abscheiderelement aus einem Material mit schwammartiger Struktur, wie etwa Keramik, umfasst. Ein Nachteil dieser Tropfenabscheideeinrichtung ist deren hoher Luftwiderstand und der damit verbundene Leistungsverlust. Um diesen Leistungsverlust auszugleichen, müssen grössere Luftbefeuchter mit höherem Energiebedarf eingesetzt werden.

In der DE-C-100 35 881 ist eine Tropfenabscheideeinrichtung beschrieben, die zur Behebung dieses Nachteils entwickelt wurde und einen kleineren Luftwiderstand aufweist. Bei dieser Tropfenabscheideeinrichtung sind mindestens zwei den Strömungsquerschnitt des Luftströmungskanals jeweils vollständig abdeckende Platten aus hygroskopischem Material mit offenporiger Schaumstruktur in Luftströmungsrichtung voneinander beabstandet angeordnet. Die mindestens zwei Platten weisen jeweils eine Anzahl in Strömungsrichtung der Luft durchgehender Öffnungen auf, wobei die Öffnungen einer Platte gegenüber den Öffnungen einer benachbarten Platte versetzt sind. Dank dieser Öffnungen, durch die ein Teil der Luft strömt, wird der Druckverlust der Luftströmung durch die Tropfenabscheideeinrichtung erheblich reduziert. Auf der Rückseite der Platten können jedoch durch die Luftströmung Wassertropfen losgerissen werden, die zuvor durch die durchgehenden Öffnungen getrieben worden sind.

Angesichts der Nachteile der bisher bekannten, oben beschriebenen Tropfenabscheideeinrichtungen liegt der Erfindung die folgende Aufgabe zugrunde. Zu schaffen ist eine Tropfenabscheideeinrichtung der eingangs erwähnten Art, die insbesondere grössere Wassertropfen aus durchströmender Luft weitgehend abscheidet, wobei der Druckverlust der Luftströmung möglichst gering sein soll.

Diese Aufgabe wird durch die erfindungsgemässe Tropfenabscheideeinrichtung gelöst, wie sie im unabhängigen Patentanspruch 1 definiert ist. Bevorzugte Ausführungsvarianten ergeben sich aus den abhängigen Patentansprüchen.

Das Wesen der Erfindung besteht im Folgenden: Eine Tropfenabscheideeinrichtung für einen einen Strömungsquerschnitt aufweisenden Luftströmungskanal, durch den in einer Luftströmungsrichtung Luft strömt, die Wasser in zerstäubter Form enthält, weist mindestens zwei in Luftströmungsrichtung voneinander beabstandet angeordnete, luftdurchlässige Abscheiderelemente auf, die zusammen den Strömungsquerschnitt des Luftströmungskanals abdecken. Jedes der Abscheiderelemente deckt jeweils nur einen Teil des Strömungsquerschnitts des Luftströmungskanals ab, so dass ein Teil der in Luftströmungsrichtung auf die Tropfenabscheideeinrichtung auftreffenden Luft diese unter Umlenkung durchströmt, ohne eines der Abscheiderelemente zu durchdringen.

Dadurch, dass ein Teil der in Luftströmungsrichtung auf die Tropfenabscheideeinrichtung auftreffenden Luft diese unter Umlenkung durchströmt, ohne eines der Abscheiderelemente zu durchdringen, kann ein zu grosser Druckverlust der Luftströmung verhindert werden. Im Vergleich zu Tropfenabscheideeinrichtungen mit Abscheiderelementen, die den Strömungsquerschnitt des Luftströmungskanals jeweils einzeln voll abdecken, kann der durch die Tropfenabscheideeinrichtung bewirkte Druckverlust um mehr als 50% reduziert werden.

Die umgelenkte Luft, die aufgrund der Trägheit der grösseren Wassertropfen nur kleinere Wassertropfen enthält, strömt jeweils zwischen einem Abscheiderelement und einer Wand des Luftströmungskanals oder zwischen zwei Abscheiderelementen durch und durchdringt nicht die Abscheiderelemente. Die auf die Abscheiderelemente aufprallenden grösseren Wassertropfen des nicht umgelenkten Teils der Luft werden durch die Abscheiderelemente aufgefangen und fliessen an diesen aufgrund der Schwerkraft nach unten. Anders als in der DE-C-100 35 881 offenbart, wo die umgelenkte Luft durch Öffnungen in den Abscheiderelementen strömt, sind hier keine derartigen Öffnungen vorhanden, die der Umlenkung der Luft dienen, und werden keine Wassertropfen durch die Abscheiderelemente getrieben und auf der Rückseite der Abscheiderelemente losgerissen. Insbesondere Wassertropfen mit einem Durchmesser grösser als ca. 40 µm können so praktisch vollständig abgeschieden werden. Auf diese Weise ist sichergestellt, dass nachfolgende Luftströmungskanalteile nicht wesentlich benetzt werden und korrodieren.

Vorzugsweise umfassen die Abscheiderelemente jeweils ein luftdurchlässiges Medium, das einen Teil der in Luftströmungsrichtung auftreffenden Luft durchströmen lässt und sicherstellt, dass bei Luftanströmgeschwindigkeiten bis 4 m/s auf der Luftaustrittseite keine Wassertropfen gebildet werden, die durch den Luftstrom mitgerissen werden. Tropfenabscheideeinrichtungen mit derartigen Abscheiderelementen eignen sich für herkömmliche Luftbefeuchtungsanlagen, insbesondere solche mit Hochdruckdüsen zur Befeuchtung der durchströmenden Luft.

Bei einer bevorzugten Ausführungsvariante umfassen die Abscheiderelemente jeweils mindestens ein Vlies, das einen Teil der in Luftströmungsrichtung auftreffenden Luft durchströmen lässt. Vlies als luftdurchlässiges Medium bewährt sich insbesondere darum, weil es mit der gewünschten Luftdurchlässigkeit relativ dünn ausgebildet werden kann und ausserdem relativ leicht und kostengünstig ist.

Mit Vorteil weisen die Abscheiderelemente jeweils einen Rahmen auf, der mit mindestens einem Klettband-Hakenband versehen ist, an dem das Vlies befestigt ist. Dieses Befestigungssystem ist einerseits kostengünstig und ermöglicht es anderseits, das Vlies einfach und rasch auszutauschen, wodurch hygienebedingte Vlieswechsel eher ausgeführt werden.

Bevorzugt weisen die Abscheiderelemente jeweils mindestens eine, vorzugsweise ebenfalls mit einem Klettband-Hakenband versehene, Klemmschiene auf, zwischen der und dem Klettband-Hakenband des Rahmens das Vlies eingeklemmt ist. Das Vlies ist so auch bei starken Luftströmen sicher am Rahmen gehalten.

Bei einer alternativen vorteilhaften Ausführungsvariante umfassen die Abscheiderelemente jeweils mindestens eine offenporige Keramikplatte, die einen Teil der in Luftströmungsrichtung auftreffenden Luft durchströmen lässt. Geeignete Keramikplatten, die zum Stand der Technik gehören, saugen einen Teil der auftreffenden Wassertropfen auf und verdunsten sie wieder in die durchströmende Luft.

Bei einer vorteilhaften Ausführungsvariante sind in einer zur Luftströmungsrichtung vertikalen Ebene zwei luftdurchlässige Abscheiderelemente voneinander beabstandet angeordnet. Die umgelenkte Luft strömt hier mindestens teilweise zwischen den beiden Abscheiderelementen durch, so dass die Abscheiderelemente nicht durchdringende, schnelle Luft direkt hinter der Tropfenabscheideeinrichtung mitten im Luftströmungskanal und nicht bzw. nicht nur am Rand vorhanden ist.

Bevorzugt beträgt der Abstand zweier in Luftströmungsrichtung voneinander beabstandet angeordneter Abscheiderelemente zwischen 2 und 30 cm, vorzugsweise zwischen 7 und 15 cm. Dieser Abstand ermöglicht eine Umlenkung der auftreffenden Luft ohne zuviel Druckverlust.

Mit Vorteil deckt ein Abscheiderelement zwischen 15% und 90%, vorzugsweise zwischen 60% und 80%, des Strömungsquerschnitts des Luftströmungskanals ab. Relativ kleine Abscheiderelemente werden dann eingesetzt, wenn mehrere Abscheiderelemente in einer zur Luftströmungsrichtung vertikalen Ebene angeordnet sind. Als besonders geeignet haben sich Luftspalte mit einer Höhe von 5% bis 35%, vorzugsweise 10% bis 20%, der Gesamthöhe des Luftströmungskanals erwiesen.

Bei einer vorteilhaften Ausführungsvariante sind die Abscheiderelemente jeweils mindestens 50 cm hoch und mindestens 50 cm breit. Die Luftströmung ist mit solchen Abscheiderelementen in geeigneter Weise teilweise umlenkbar und teilweise durch die Abscheiderelemente durchführbar.

Im Folgenden wird die erfindungsgemässe Tropfenabscheideeinrichtung unter Bezugnahme auf die beigefügten Zeichnungen anhand von Ausführungsbeispielen detaillierter beschrieben. Es zeigen:
- Fig. 1 -: eine Perspektivansicht einer Luftbefeuchtungsanlage mit einem ersten Ausführungsbeispiel einer erfindungsgemässen Tropfenabscheideeinrichtung, wobei Teile eines Luftströmungskanals entfernt sind;
- Fig. 2 und 3 -: Detailansichten der Befestigung eines Vlieses an einem Rahmen eines Abscheiderelements der Tropfenabscheideeinrichtung von Fig. 1;
- Fig. 4 -: schematisch die Anordnung der beiden Abscheiderelemente der Tropfenabscheideeinrichtung von Fig. 1 im Luftströmungskanal;
- Fig. 5 -: schematisch die Anordnung zweier Abscheiderelemente einer Tropfenabscheideeinrichtung gemäss einem zweiten Ausführungsbeispiel im Luftströmungskanal;
- Fig. 6 -: schematisch die Anordnung von vier Abscheiderelementen einer Tropfenabscheideeinrichtung gemäss einem dritten Ausführungsbeispiel im Luftströmungskanal;
- Fig. 7 -: schematisch die Anordnung von drei Abscheiderelementen einer Tropfenabscheideeinrichtung gemäss einem vierten Ausführungsbeispiel im Luftströmungskanal; und
- Fig. 8 -: schematisch die Anordnung von vier Abscheiderelementen einer Tropfenabscheideeinrichtung gemäss einem fünften Ausführungsbeispiel im Luftströmungskanal.

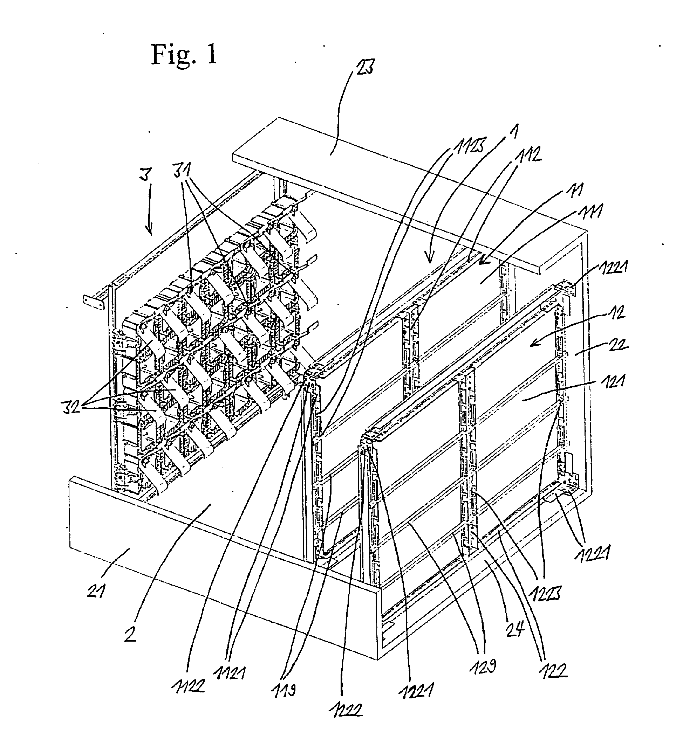

Fig. 1 zeigt eine Luftbefeuchtungsanlage mit einem Düsenstock 3 und einer erfindungsgemässen Tropfenabscheideeinrichtung 1 gemäss einem ersten Ausführungsbeispiel, die in einem Luftströmungskanal 2 angeordnet sind. Der Luftströmungskanal 2, der Düsenstock 3 und die Tropfenabscheideeinrichtung 1 werden mit Luft durchströmt, die vor dem Düsenstock 3 im Allgemeinen relativ trocken ist, direkt nach dem Düsenstock 3 befeuchtet wird und schliesslich durch die Tropfenabscheideeinrichtung 1 strömt.

Der Düsenstock 3 umfasst drei übereinander angeordnete Reihen ä je sieben Düsen 31, vorzugsweise Hochdruckdüsen mit einem Betriebsdruck ≥ 10 bar, insbesondere ≥ 60 bar, die in Luftströmungsrichtung, d.h. in Richtung Tropfenabscheideeinrichtung 1, ausgerichtet sind. An den Düsen 31 sind jeweils Sprühstrahl-Aufweiteinrichtungen 32 angeordnet, die eine Aufweitung des Sprühstrahls der Düsen 31 und somit eine schnelle und gleichmässige Verteilung der von den Düsen 31 abgestrahlten Flüssigkeitsteilchen bewirken. Solche Sprühstrahl-Aufweiteinrichtungen 32 sind in der Schweizer Patentanmeldung Nr. 1105/02 der vorliegenden Anmelderin im Detail beschrieben. Die Düsen 31 und die Sprühstrahl-Aufweiteinrichtungen 32 werden von einer luftdurchlässigen Rahmenkonstruktion gehalten, die an die Seitenwände 21, 22 des Luftströmungskanals 2 geschraubt ist.

Die Tropfenabscheideeinrichtung 1 umfasst zwei Abscheiderelemente 11 bzw. 12, die in Luftströmungsrichtung ca. 15 cm voneinander beabstandet im Luftströmungskanal 2 angeordnet sind. Die beiden Abscheiderelemente 11, 12 sind etwa 50 cm hoch und etwa 60 cm bzw. 70 cm breit. Sie weisen jeweils ein luftdurchlässiges Medium in Form eines Vlieses 111 bzw. 121 auf, das an einem Rahmen 112 bzw. 122 befestigt ist. In Aussparungen 1123 bzw. 1223 der Rahmen 112, 122 sind Querstangen 119 bzw. 129 gelagert, die das Vlies 111 bzw. 121 in Luftströmungsrichtung stützen. Die Rahmen 112, 122 sind über mit Löchern 1122 bzw. 1222 versehene Eckelemente 1121 bzw. 1221 an den Luftströmungskanal 2 geschraubt.

Das erste Abscheiderelement 11 ist an die beiden Seitenwände 21 und 22 sowie an die Decke 23 des Luftströmungskanals 2 geschraubt und erstreckt sich über etwa 85% der Höhe des Strömungsquerschnitts des Luftströmungskanals 2. D.h., zwischen dem Abscheiderelement 11 und dem Boden 24 des Luftströmungskanals 2 besteht ein Luftspalt von ca. 15% der Höhe des Strömungsquerschnitts des Luftströmungskanals 2.

Das zweite Abscheiderelement 12 ist an die beiden Seitenwände 21 und 22 sowie an den Boden 24 des Luftströmungskanals 2 geschraubt und erstreckt sich ebenfalls über etwa 85% der Höhe des Strömungsquerschnitts des Luftströmungskanals 2. D.h., zwischen dem Abscheiderelement 12 und der Decke 23 des Luftströmungskanals 2 besteht ein Luftspalt von ca. 15% der Höhe des Strömungsquerschnitts des Luftströmungskanals 2.

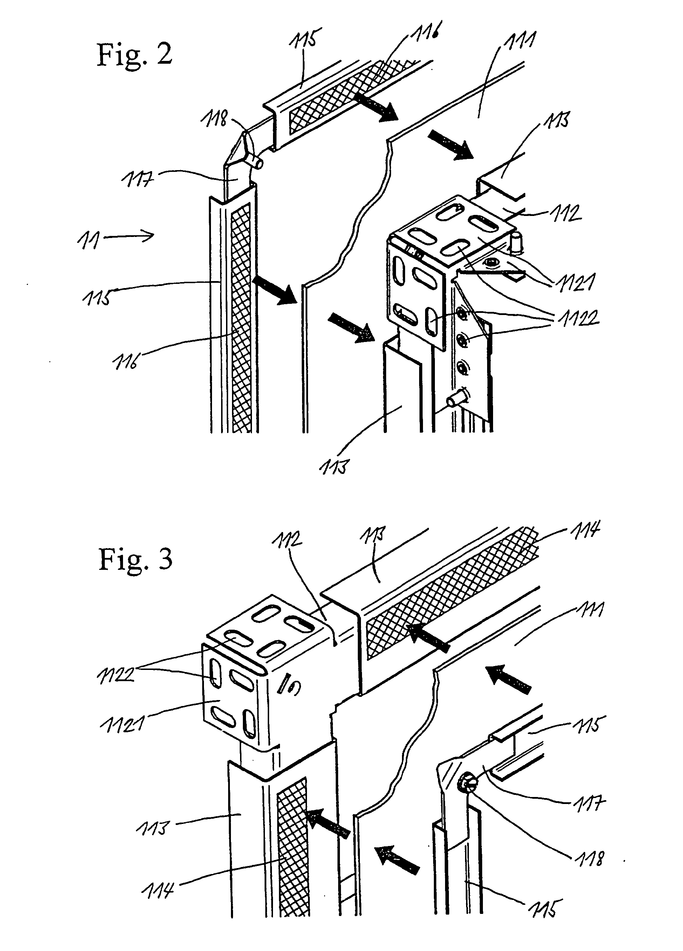

Die Fig. 2 und 3 zeigen die Befestigung des Vlieses 111 am Rahmen 112 aus zwei verschiedenen Blickwinkeln. Am Rahmen 112 sind hierzu oben, unten und an beiden Seiten Profilteile 113 angebracht, die jeweils mit einem Klettband-Hakenband 114 versehen sind. Das Vlies 111 wird an die Klettband-Hakenbänder 114 gedrückt und haftet an diesen ähnlich wie ein Klettband-Schlaufenband. Eine derartige Befestigung reicht in vielen Fällen bereits aus.

Zur Verstärkung der Befestigung, insbesondere für grössere Luftströmungsgschwindigkeiten, werden beim vorliegenden Ausführungsbeispiel jedoch auf der den Profilteilen 113 abgewandten Seite des Vlieses 111 noch Klemmschienen 115 angebracht, die jeweils mit einem Klettband-Hakenband 116 versehen sind. Die Klemmschienen 115 werden durch Winkelelemente 117 gegen die Profilteile 113 gedrückt, wobei das Vlies 111 zwischen den Klemmschienen 115 und den Profilteilen 113 eingeklemmt wird und sowohl an den Klettband-Hakenbändern 114 der Profilteile 113 als auch an den Klettband-Hakenbändern 116 der Klemmschienen 115 haftet. Die Winkelelemente 117 werden mittels Schrauben 118 an die Eckelemente 1121 des Rahmens 112 geschraubt.

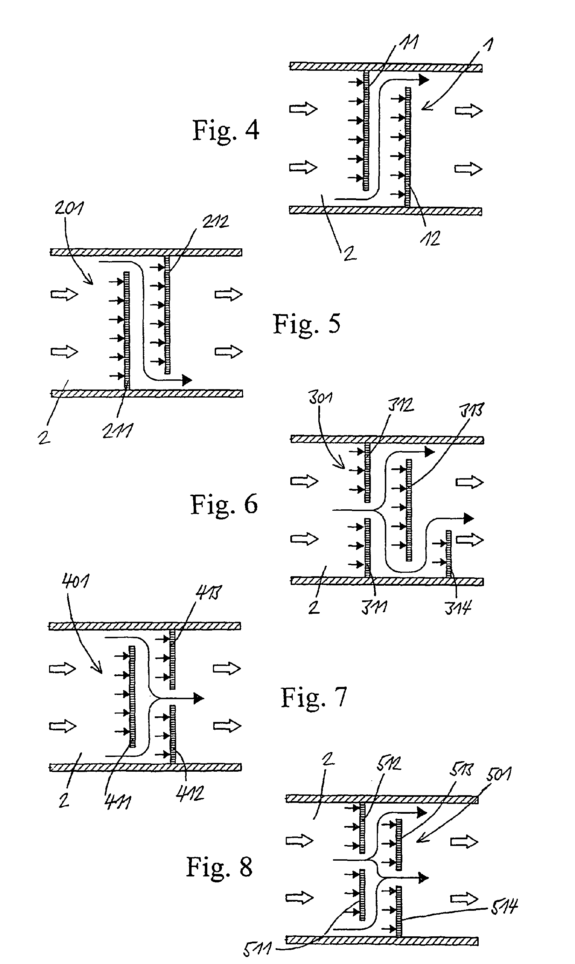

Wie in Fig. 4 dargestellt, trifft die vom Düsenstock 3 herkommende, horizontale Luftströmung (weisse Pfeile) auf die Tropfenabscheideeinrichtung 1 auf, wobei ein Teil dieser Luftströmung durch das erste Abscheiderelement 11 strömt und ein Teil unterhalb des ersten Abscheiderelements 11 durchströmt (schwarze Pfeile). Aus der durch das erste Abscheiderelement 11 strömenden Luft werden insbesondere die grösseren Wassertropfen abgeschieden und fliessen aufgrund der Schwerkraft am Abscheiderelement 11 nach unten, wo sie in nicht dargestellter Weise gesammelt und abgeführt werden können.

Die unterhalb des ersten Abscheiderelements 11 durchströmende Luft und die das erste Abscheiderelement 11 durchströmende Luft treffen zum Teil auf das zweite Abscheiderelement 12 auf und strömen zum Teil über diesem durch. Die auf das zweite Abscheiderelement 12 auftreffende Luft wird teilweise umgelenkt und strömt schliesslich auch über diesem durch. Ein Teil der nicht umgelenkten, auf das zweite Abscheiderelement 12 auftreffenden Luft durchströmt dieses, wobei insbesondere die grösseren Wassertropfen abgeschieden werden und aufgrund der Schwerkraft am Abscheiderelement 12 nach unten fliessen, wo sie in nicht dargestellter Weise gesammelt und abgeführt werden können. Der umgelenkte Teil der Luft enthält höchstens kleinere, nicht störende Wassertropfen, da die grösseren Wassertropfen aufgrund der Trägheit nicht ausreichend umgelenkt werden, um das zweite Abscheiderelement 12 zu umströmen.

Durch diese durch die Abscheiderelemente 11 und 12 bewirkte teilweise Luftströmungsumlenkung und die Wahl eines Vlieses mit einer geeigneten Dichtigkeit kann erreicht werden, dass aus der die Tropfenabscheideeinrichtung 1 durchströmenden Luft insbesondere die grösseren Wassertropfen mit einem Durchmesser grösser als ca. 40 µm abgeschieden werden, ohne dass der Druckverlust der Luftströmung zu gross ist. Bei einer Anströmgeschwindigkeit der Luft von 2 m/s ist der Druckverlust kleiner als 80 Pa.

Bei dem in Fig. 5 dargestellten zweiten Ausführungsbeispiel ist das erste Abscheiderelement 211 der Tropfenabscheideeinrichtung 201 am Boden und an den beiden Seitenwänden des Luftströmungskanals 2 befestigt, während zwischen dem oberen Ende des Abscheiderelements 211 und der Decke des Luftströmungskanals 2 ein Luftspalt von ca. 15% der Höhe des Strömungsquerschnitts vorhanden ist. Das zweite Abscheiderelement 212, das in Luftströmungsrichtung ca. 15 cm hinter dem ersten Abscheiderelement 211 angeordnet ist, ist an der Decke und an den beiden Seitenwänden des Luftströmungskanals 2 befestigt, während zwischen dem unteren Ende des Abscheiderelements 211 und dem Boden des Luftströmungskanals 2 ein Luftspalt von ca. 15% der Höhe des Strömungsquerschnitts vorhanden ist. Ansonsten gilt entsprechend das zum ersten Ausführungsbeispiel Gesagte.

Bei dem in Fig. 6 dargestellten dritten Ausführungsbeispiel einer erfindungsgemässen Tropfenabscheideeinrichtung 301 sind in einer ersten zur Luftströmungsrichtung vertikalen Ebene zwei luftdurchlässige Abscheiderelemente 311 und 312 ca. 10 cm voneinander beabstandet angeordnet, d.h. zwischen ihnen ist ein Luftspalt vorhanden. Das erste Abscheiderelement 311 ist am Boden und an den beiden Seitenwänden des Luftströmungskanals 2 befestigt, während das zweite Abscheiderelement 312 an der Decke und an den beiden Seitenwänden des Luftströmungskanals 2 befestigt ist. Ein drittes Abscheiderelement 313 ist in Luftströmungsrichtung ca. 15 cm hinter den beiden ersten Abscheiderelementen 311, 312 nur an den beiden Seitenwänden des Luftströmungskanals 2 befestigt, während zwischen dem unteren bzw. oberen Ende des Abscheiderelements 211 und dem Boden bzw. der Decke des Luftströmungskanals 2 jeweils ein Luftspalt von ca. 15% der Höhe des Strömungsquerschnitts, was hier etwa 10 cm entspricht, vorhanden ist. In Luftströmungsrichtung ca. 15 cm hinter dem dritten Abscheiderelement 313 ist noch ein viertes Abscheiderelement 314 am Boden und an den beiden Seitenwänden des Luftströmungskanals 2 befestigt, das nur etwa 20 cm hoch ist. Im Weiteren gilt entsprechend das zum ersten Ausführungsbeispiel Gesagte.

Bei dem in Fig. 7 dargestellten vierten Ausführungsbeispiel einer erfindungsgemässen Tropfenabscheideeinrichtung 401 ist ein erstes Abscheiderelement 411 nur an den beiden Seitenwänden des Luftströmungskanals 2 befestigt, während zwischen dem unteren bzw. oberen Ende des Abscheiderelements 411 und dem Boden bzw. der Decke des Luftströmungskanals 2 jeweils ein Luftspalt von ca. 15% der Höhe des Strömungsquerschnitts, was hier etwa 10 cm entspricht, vorhanden ist. In Luftströmungsrichtung ca. 15 cm hinter dem ersten Abscheiderelement 411 sind in einer zur Luftströmungsrichtung vertikalen Ebene zwei luftdurchlässige Abscheiderelemente 412 und 413 ca. 10 cm voneinander beabstandet angeordnet, d.h. zwischen ihnen ist ein Luftspalt vorhanden. Das Abscheiderelement 412 ist am Boden und an den beiden Seitenwänden des Luftströmungskanals 2 befestigt, während das Abscheiderelement 413 an der Decke und an den beiden Seitenwänden des Luftströmungskanals 2 befestigt ist. Ansonsten gilt entsprechend das zum ersten Ausführungsbeispiel Gesagte.

Bei dem in Fig. 8 dargestellten fünften Ausführungsbeispiel einer erfindungsgemässen Tropfenabscheideeinrichtung 501 sind in einer ersten zur Luftströmungsrichtung vertikalen Ebene zwei luftdurchlässige Abscheiderelemente 511 und 512 ca. 10 cm voneinander beabstandet angeordnet, d.h. zwischen ihnen ist ein Luftspalt vorhanden. Das erste Abscheiderelement 511 ist nur an den beiden Seitenwänden des Luftströmungskanals 2 befestigt, so dass auch zwischen dem unteren Ende des Abscheiderelements 511 und dem Boden des Luftströmungskanals 2 ein Luftspalt von ca. 15% der Höhe des Strömungsquerschnitts, was hier etwa 10 cm entspricht, vorhanden ist. Das zweite Abscheiderelement 512 ist an der Decke und an den beiden Seitenwänden des Luftströmungskanals 2 befestigt. In einer zweiten zur Luftströmungsrichtung vertikalen Ebene, die sich etwa 15 cm hinter der ersten vertikalen Ebene befindet, sind zwei weitere luftdurchlässige Abscheiderelemente 513 und 514 ca. 10 cm voneinander beabstandet angeordnet. Das Abscheiderelement 513 ist nur an den beiden Seitenwänden des Luftströmungskanals 2 befestigt, so dass auch zwischen dem oberen Ende des Abscheiderelements 513 und der Decke des Luftströmungskanals 2 ein Luftspalt von ca. 15% der Höhe des Strömungsquerschnitts, was hier etwa 10 cm entspricht, vorhanden ist. Das Abscheiderelement 514 ist am Boden und an den beiden Seitenwänden des Luftströmungskanals 2 befestigt. Ansonsten gilt entsprechend das zum ersten Ausführungsbeispiel Gesagte.

Zu den vorbeschriebenen erfindungsgemässen Tropfenabscheideeinrichtungen sind weitere konstruktive Variationen realisierbar. Hier ausdrücklich erwähnt sei noch, dass anstelle der Vliese als luftdurchlässige Medien beispielsweise auch offenporige Keramikplatten verwendet werden können.

## Patentansprüche

1. Tropfenabscheideeinrichtung (1; 201; 301; 401; 501) für einen einen Strömungsquerschnitt aufweisenden Luftströmungskanal (2), durch den in einer Luftströmungsrichtung Luft strömt, die Wasser in zerstäubter Form enthält, wobei die Tropfenabscheideeinrichtung (1; 201; 301; 401; 501) mindestens zwei in Luftströmungsrichtung voneinander beabstandet angeordnete, luftdurchlässige Abscheiderelemente (11, 12; 211, 212; 311-314; 411-413; 511-514) aufweist, die zusammen den Strömungsquerschnitt des Luftströmungskanals (2) abdecken, **dadurch gekennzeichnet, dass** jedes der Abscheiderelemente (11, 12; 211, 212; 311-314; 411-413; 511-514) jeweils nur einen Teil des Strömungsquerschnitts des Luftströmungskanals (2) abdeckt, so dass ein Teil der in Luftströmungsrichtung auf die Tropfenabscheideeinrichtung (1; 201; 301; 401; 501) auftreffenden Luft diese unter Umlenkung durchströmt, ohne eines der Abscheiderelemente (11, 12; 211, 212; 311-314; 411-413; 511-514) zu durchdringen.

2. Tropfenabscheideeinrichtung (1; 201; 301; 401; 501) nach Anspruch 1, **dadurch gekennzeichnet, dass** die Abscheiderelemente (11, 12; 211, 212; 311-314; 411-413; 511-514) jeweils ein luftdurchlässiges Medium (111, 121) umfassen, das einen Teil der in Luftströmungsrichtung auftreffenden Luft durchströmen lässt und sicherstellt, dass bei Luftanströmgeschwindigkeiten bis 4 m/s auf der Luftaustrittseite keine Wassertropfen gebildet werden, die durch den Luftstrom mitgerissen werden.

3. Tropfenabscheideeinrichtung (1; 201; 301; 401; 501) nach Anspruch 1 oder 2, **dadurch gekennzeichnet, dass** die Abscheiderelemente (11, 12; 211, 212; 311-314; 411-413; 511-514) jeweils mindestens ein Vlies (111, 121) umfassen, das einen Teil der in Luftströmungsrichtung auftreffenden Luft durchströmen lässt.

4. Tropfenabscheideeinrichtung (1; 201; 301; 401; 501) nach Anspruch 3, **dadurch gekennzeichnet, dass** die Abscheiderelemente (11, 12; 211, 212; 311-314; 411-413; 511-514) jeweils einen Rahmen (112, 122) aufweisen, der mit mindestens einem Klettband-Hakenband (114) versehen ist, an dem das Vlies (111, 121) befestigt ist.

5. Tropfenabscheideeinrichtung (1; 201; 301; 401; 501) nach Anspruch 4, **dadurch gekennzeichnet, dass** die Abscheiderelemente (11, 12; 211, 212; 311-314; 411-413; 511-514) jeweils mindestens eine, vorzugsweise ebenfalls mit einem Klettband-Hakenband (116) versehene, Klemmschiene (115) aufweisen, zwischen der und dem Klettband-Hakenband (114) des Rahmens (112, 122) das Vlies (111, 121) eingeklemmt ist.

6. Tropfenabscheideeinrichtung nach Anspruch 1 oder 2, **dadurch gekennzeichnet, dass** die Abscheiderelemente jeweils mindestens eine offenporige Keramikplatte umfassen, die einen Teil der in Luftströmungsrichtung auftreffenden Luft durchströmen lässt.

7. Tropfenabscheideeinrichtung (301; 501) nach einem der Ansprüche 1 bis 6, **dadurch gekennzeichnet, dass** in einer zur Luftströmungsrichtung vertikalen Ebene zwei luftdurchlässige Abscheiderelemente (311, 312; 511-514) voneinander beabstandet angeordnet sind.

8. Tropfenabscheideeinrichtung (1; 201; 301; 401; 501) nach einem der Ansprüche 1 bis 7, **dadurch gekennzeichnet, dass** der Abstand zweier in Luftströmungsrichtung voneinander beabstandet angeordneter Abscheiderelemente (11, 12; 211, 212; 311-314; 411-413; 511-514) zwischen 2 und 30 cm, vorzugsweise zwischen 7 und 15 cm, beträgt.

9. Tropfenabscheideeinrichtung (1; 201; 301; 401; 501) nach einem der Ansprüche 1 bis 8, **dadurch gekennzeichnet, dass** ein Abscheiderelement (11, 12; 211, 212; 311-314; 411-413; 511-514) zwischen 15% und 90%, vorzugsweise zwischen 60% und 80%, des Strömungsquerschnitts des Luftströmungskanals (2) abdeckt.

10. Tropfenabscheideeinrichtung (1; 201; 301; 401; 501) nach einem der Ansprüche 1 bis 9, **dadurch gekennzeichnet, dass** die Abscheiderelemente (11, 12; 211, 212; 311-314; 411-413; 511-514) jeweils mindestens 50 cm hoch und mindestens 50 cm breit sind.

## Claims

1. Droplet separator device (1; 201; 301; 401; 501) for an air flow channel (2) comprising a flow cross-section through which air containing water in an atomised form flows in an air flow direction, in which the droplet separator device (1; 201; 301; 401; 501) comprises at least two air permeable separator elements (11, 12; 211, 212; 311-314; 411-413; 511-514) arranged distanced apart from each other in the air flow direction, which together cover the flow cross-section of the air flow channel (2), **characterised in that** each of the separator elements (11, 12; 211, 212; 311-314; 411-413; 511-514) each cover only a part of the flow cross-section of the air flow channel (2), so that a part of the air striking the droplet separator device (1; 201; 301; 401; 501) in the air flow direction flows through this in a deviated manner, without penetrating one of the separator elements (11, 12; 211, 212; 311-314; 411-413; 511-514).

2. Droplet separator device (1; 201; 301; 401; 501) according to claim 1, **characterised in that** the separator elements (11, 12; 211, 212; 311-314; 411-413; 511-514) each comprise an air permeable medium (111, 121), which allows a part of the air striking in the air flow direction to flow and safeguards that no water drops form on the air outlet side with air speeds up to 4 m/s which are carried along by the air flow.

3. Droplet separator device (1; 201; 301; 401; 501) according to claim 1 or 2, **characterised in that** the separator elements (11, 12; 211, 212; 311-314; 411-413; 511-514) each comprise at least a fleece (111, 121), which allows a part of the air striking in the air flow direction to flow.

4. Droplet separator device (1; 201; 301; 401; 501) according to claim 3, **characterised in that** the separator elements (11, 12; 211, 212; 311-314; 411-413; 511-514) each comprise a frame (112, 122), which is provided with at least one velcro-hook tape (114), on which the fleece (111, 121) is attached.

5. Droplet separator device (1; 201; 301; 401; 501) according to claim 4, **characterised in that** the separator elements (11, 12; 211, 212; 311-314; 411-413; 511-514) each comprise at least one clamp rail (115), preferably likewise provided with a velcro-hook tape (116), and between the at least one clamp rail (115) and the velcro-hook tape (114) of the frame (112, 122) the fleece (111, 121) is clamped.

6. Droplet separator device according to claim 1 or 2, **characterised in that** the separator elements each comprise at least one open-pored ceramic plate, which allows a part of the air striking in the air flow direction to flow.

7. Droplet separator device (301; 501) according to any one of the claims 1 to 6, **characterised in that** two air permeable separator elements (311, 312; 511-514) are arranged distanced apart from each other in a plane vertical to the air flow direction.

8. Droplet separator device (1; 201; 301; 401; 501) according to any one of the claims 1 to 7, **characterised in that** the distance between the two separator elements (11, 12; 211, 212; 311-314; 411-413; 511-514) arranged distanced apart from each other in the air flow direction is between 2 and 30 cm, preferably between 7 and 15 cm.

9. Droplet separator device (1; 201; 301; 401; 501) according to any one of the claims 1 to 8, **characterised in that** one separator element (11, 12; 211, 212; 311-314; 411-413; 511-514) covers between 15% and 90%, preferably between 60% and 80%, of the flow cross-section of the air flow channel (2).

10. Droplet separator device (1; 201; 301; 401; 501) according to any one of the claims 1 to 9, **characterised in that** the separator elements (11, 12; 211, 212; 311-314; 411-413; 511-514) are each at least 50 cm high and at least 50 cm wide.

## Revendications

1. Dispositif de séparation de gouttes (1 ; 201 ; 301 ; 401 ; 501) pour un canal d'écoulement d'air (2) présentant une section d'écoulement, à travers lequel de l'air s'écoule dans une direction d'écoulement d'air et contient de l'eau sous forme pulvérisée, le dispositif de séparation de gouttes (1 ; 201 ; 301 ; 401 ; 501) comportant au moins deux éléments de séparation (11, 12 ; 211, 212 ; 311-314 ; 411-413 ; 511-514) perméables à l'air, disposés écartés l'un de l'autre dans la direction d'écoulement d'air, lesquels recouvrent ensemble la section d'écoulement du canal d'écoulement d'air (2), **caractérisé en ce que** chacun des éléments de séparation (11, 12 ; 211, 212 ; 311-314 ; 411-413 ; 511-514) recouvre uniquement une partie de la section d'écoulement du canal d'écoulement d'air (2), ce qui fait qu'une partie de l'air parvenant dans la direction d'écoulement d'air sur le dispositif de séparation de gouttes (1 ; 201 ; 301 ; 401 ; 501) circule à travers celui-ci par déviation, sans pénétrer à travers l'un des éléments de séparation (11, 12 ; 211, 212 ; 311-314 ; 411-413 ; 511-514).

2. Dispositif de séparation de gouttes (1 ; 201 ; 301 ; 401 ; 501) selon la revendication 1, **caractérisé en ce que** les éléments de séparation (11, 12 ; 211, 212 ; 311-314 ; 411-413 ; 511-514) comprennent chacun un milieu perméable à l'air (111, 121) qui laisse passer une partie de l'air arrivant dans la direction d'écoulement d'air, et assure qu'à des vitesses d'arrivée de l'air allant jusqu'à 4 m/s, il ne se forme sur le côté de sortie d'air aucune goutte d'eau entraînée par le courant d'air.

3. Dispositif de séparation de gouttes (1 ; 201 ; 301 ; 401 ; 501) selon l'une quelconque des revendications 1 ou 2, **caractérisé en ce que** les éléments de séparation (11, 12 ; 211, 212 ; 311-314 ; 411-413 ; 511-514) comprennent chacun au moins un non-tissé (111, 121) qui laisse passer une partie de l'air parvenant dans la direction d'écoulement d'air.

4. Dispositif de séparation de gouttes (1 ; 201 ; 301 ; 401 ; 501) selon la revendication 3, **caractérisé en ce que** les éléments de séparation (11, 12 ; 211, 212 ; 311-314 ; 411-413 ; 511-514) comportent chacun un cadre (112, 122) qui est pourvu d'au moins une bande velcro (114) sur laquelle est fixé le non-tissé (11, 121).

5. Dispositif de séparation de gouttes (1 ; 201 ; 301 ; 401 ; 501) selon la revendication 4, **caractérisé en ce que** les éléments de séparation (11, 12 ; 211, 212 ; 311-314 ; 411-413 ; 511-514) comportent chacun au moins un rail de serrage (115), pourvu de préférence également d'une bande velcro (116), entre lequel et la bande velcro (114) du cadre (112, 122) est serré le non-tissé (111, 121).

6. Dispositif de séparation de gouttes selon l'une quelconque des revendications 1 ou 2, **caractérisé en ce que** les éléments de séparation comprennent chacun au moins une plaque céramique à pores ouverts qui laisse passer une partie de l'air parvenant dans la direction d'écoulement d'air.

7. Dispositif de séparation de gouttes (301 ; 501) selon l'une quelconque des revendications 1 à 6, **caractérisé en ce que** deux éléments de séparation (311, 312 ; 511-514) perméables à l'air sont disposés écartés l'un de l'autre dans un plan vertical par rapport à la direction d'écoulement d'air.

8. Dispositif de séparation de gouttes (1 ; 201 ; 301 ; 401 ; 501) selon l'une quelconque des revendications 1 à 7, **caractérisé en ce que** la distance de deux éléments de séparation (11, 12 ; 211, 212 ; 311-314 ; 411-413 ; 511-514) disposés écartés l'un de l'autre dans la direction d'écoulement d'air, est comprise entre 2 et 30 cm, de préférence entre 7 et 15 cm.

9. Dispositif de séparation de gouttes (1 ; 201 ; 301 ; 401 ; 501) selon l'une quelconque des revendications 1 à 8, **caractérisé en ce qu'**un élément de séparation (11, 12 ; 211, 212 ; 311-314 ; 411-413 ; 511-514) recouvre entre 15 % et 90 %, de préférence entre 60 % et 80 % de la section d'écoulement du canal d'écoulement d'air (2).

10. Dispositif de séparation de gouttes (1 ; 201 ; 301 ; 401 ; 501) selon l'une quelconque des revendications 1 à 9, **caractérisé en ce que** les éléments de séparation (11, 12 ; 211, 212 ; 311-314 ; 411-413 ; 511-514) présentent chacun une hauteur d'au moins 50 cm et une largeur d'au moins 50 cm.
